# EUROPÄISCHE PATENTSCHRIFT

(11) **EP 1 388 482 B1**
(45) Veröffentlichungstag und Bekanntmachung des Hinweises auf die Patenterteilung: **04.05.2005**
(21) Anmeldenummer: 03017240.7
(22) Anmeldetag: 30.07.2003
(51) Int. Cl.: B62D 5/06

(54) **Verfahren zum Steuern einer elektrohydraulischen Pumpe**
Control method for an electro-hydraulic pump
Methode de réglage pour une pompe électro-hydraulique

(30) Priorität: 10.08.2002 DE 10236851
(43) Veröffentlichungstag der Anmeldung: 11.02.2004
(73) Patentinhaber: ZF Lenksysteme GmbH, 73527 Schwäbisch Gmünd (DE)
(72) Erfinder: Hudelmaier, Gebhard, 73563 Mögglingen (DE); Jäger, Claus, 73527 Schwäbisch Gmünd (DE); Wahl, Gernot, 73529 Schwäbisch Gmünd (DE)

(56) Entgegenhaltungen:
- EP-A- 0 053 297
- EP-A- 0 361 725
- EP-A- 1 035 001

## Beschreibung

Die Erfindung betrifft ein Verfahren zum Steuern einer elektrohydraulischen Pumpe, insbesondere einer Flügelpumpe, Rollenzellenpumpe oder Zahnradpumpe, die einen Volumenstrom für einen Verbraucher, insbesondere für eine Hilfskraftlenkung eines Kraftfahrzeuges, erzeugt, wobei die Pumpe von einem Elektromotor angetrieben wird, und wobei die Drehzahl der Pumpe in Abhängigkeit eines Schaltpunktes zwischen einer Standby-Drehzahl und einem Normalbetrieb variiert wird.

Ein gattungsgemäßes Verfahren zum Steuern einer elektrohydraulischen Pumpe ist aus der EP 0 913 316 A2 bekannt.

Elektrohydraulische Pumpen werden in Kraftfahrzeugen, insbesondere für Hilfskraftlenkungen, eingesetzt, wobei durch den von der Pumpe erzeugten Druck eine vom Fahrer mittels der Lenkhandhabe vorgegebene Lenkbewegung unterstützt wird. Dabei ist es sowohl bekannt, den Fahrzeugmotor zum Betreiben der hydraulischen Pumpe einzusetzen, als auch einen unabhängigen Elektromotor zum Antrieb der Pumpe zu verwenden. Der Einsatz eines Elektromotors ermöglicht es, die Pumpe zur Energieeinsparung, wenn keine Hilfskraft benötigt wird, mit einer niedrigen Umdrehungszahl zu betreiben. Ein derartiger Betrieb einer elektrohydraulischen Pumpe tritt insbesondere dann auf, wenn das Fahrzeug in einer geraden Linie bewegt wird oder still steht.

Hinsichtlich eines grundsätzlichen Aufbaus einer elektrohydraulisch betriebenen Hilfskraftlenkung wird auf die EP 53 297 A1 verwiesen.

Aus der gattungsgemäßen Schrift geht ein Verfahren zum Steuern einer elektrohydraulischen Pumpe bzw. einer elektro-hydraulisch unterstützten Hilfskraftlenkung hervor. Dabei ist vorgesehen, dass der Schaltpunkt, bei dem die Pumpe von einer Standby-Drehzahl auf eine höhere Drehzahl zur Versorgung der Hilfskraftlenkung umgeschaltet wird, an Hand von verschiedenen Parametern innerhalb eines Schaltbereiches ausgewählt wird.

Bei höheren Temperaturen soll durch Absenken des Motorstroms (Absenken des maximal verfügbaren Drucks) die weitere Erwärmung des Systems verhindert werden.

Von Nachteil hierbei ist jedoch, dass diese Maßnahme nur in einem Betriebsbereich < 10 % (d.h. wenn die Fahrzeugräder ausgelenkt werden sollen) geeignet ist, die Temperaturerhöhung zu verringern. Vorteile ergeben sich durch diese Maßnahme lediglich im Leistungsbereich bei Lenkbewegungen. Im restlichen Betriebsbereich wird eine Temperaturerhöhung im System nicht verhindert.

Von Nachteil bei allen aus der Praxis bekannten Systemen ist, dass sich unter extremen Bedingungen Temperaturen einstellen können, die ein Abschalten der elektrohydraulischen Pumpe, des sogenannten Power-Packs, sowie weiterer Einrichtungen der Hilfskraftlenkung unumgänglich machen bzw. deren Ausfall verursachen.

Der vorliegenden Erfindung liegt daher die Aufgabe zugrunde, ein Verfahren zum Steuern einer elektrohydraulischen Pumpe zu schaffen, wodurch die Eigenerwärmung der Pumpe, insbesondere in temperaturkritischen Zuständen weitgehend verringert bzw. vermieden wird, wobei das Verfahren einfach durchführbar und kostengünstig realisierbar sein soll.

Erfindungsgemäß wird diese Aufgabe durch die kennzeichnenden Merkmale des Anspruchs 1 gelöst.

Dadurch, dass die Standby-Drehzahl der elektrohydraulischen Pumpe temperaturabhängig verändert wird, kann in temperaturkritischen Zuständen die Eigenerwärmung der elektrohydraulischen Pumpe reduziert werden. Somit ist ein Betrieb der Pumpe auch unter extremen Bedingungen gewährleistet, so dass gegebenenfalls keine oder erst ein spätes Abschalten der Pumpe bzw. des Power-Packs oder weiterer Teile der Hilfskraftlenkung notwendig ist.

Der Erfinder hat in nicht naheliegender Weise erkannt, dass ein Temperaturschutz bzw. eine Absenkung der Eigenerwärmung der Pumpe im Standby-Drehzahlbereich, der bei über 90 % des Betriebs anliegt, besonders wirksam ist. Durch die Absenkung bzw. Reduzierung der Standby-Drehzahl der Pumpe in 90 % der Fahrsituationen bzw. des Betriebs lässt sich dem Anstieg der Temperatur im System besonders effektiv entgegenwirken.

Analog dazu, dass bei steigenden Temperaturen die Standby-Drehzahl der Pumpe reduziert wird, kann bei anschließend wieder fallender Temperatur die Standby-Drehzahl wieder erhöht werden.

Vorteilhafte Ausgestaltungen und Weiterbildungen der Erfindung ergeben sich aus den weiteren Unteransprüchen und aus den nachfolgend an Hand der Zeichnung prinzipmäßig dargestellten Ausführungsbeispielen.

Es zeigt:
- Fig. 1: ein Koordinatensystem mit einer Darstellung einer kontinuierlichen Veränderung der Standby-Drehzahl in Abhängigkeit.der Temperatur;
- Fig. 2: ein Verfahren, um die Standby-Drehzahl temperaturabhängig stufenweise zu erhöhen bzw. abzusenken; und
- Fig. 3: eine Abbildung einer stufenweise vorgenommenen Veränderung der Standby-Drehzahl in Abhängigkeit der Temperatur gemäß Fig. 2.

Elektrohydraulische Pumpen, Verfahren zum Steuern derselben sowie Hilfskraftlenkungen für Kraftfahrzeuge sind aus dem Stand der Technik hinlänglich bekannt, weshalb nachfolgend nur auf die für die Erfindung wesentlichen Merkmale näher eingegangen wird.

Hinsichtlich eines Verfahrens zum Steuern von elektrohydraulischen Pumpen wird hierbei auf die EP 0 913 316 A2 verwiesen. Allgemein hinsichtlich Servosteuerungen bzw. Lenkungen wird auf die DE 44 18 118 C1 verwiesen.

Das erfindungsgemäße Verfahren zum Steuern einer elektrohydraulischen Pumpe eignet sich insbesondere für Flügelpumpen, Rollenzellenpumpen oder Zahnradpumpen, die einen Volumenstrom (Druckmittelstrom) bzw. Druck für einen Verbraucher, insbesondere für eine Hilfskraftlenkung eines Kraftfahrzeuges, erzeugen. Selbstverständlich ist das erfindungsgemäße Verfahren hierauf jedoch nicht beschränkt.

Unter der Bezeichnung "Kraftfahrzeuge" sollen auch solche für Land-, See- und Luftfahrzeuge fallen.

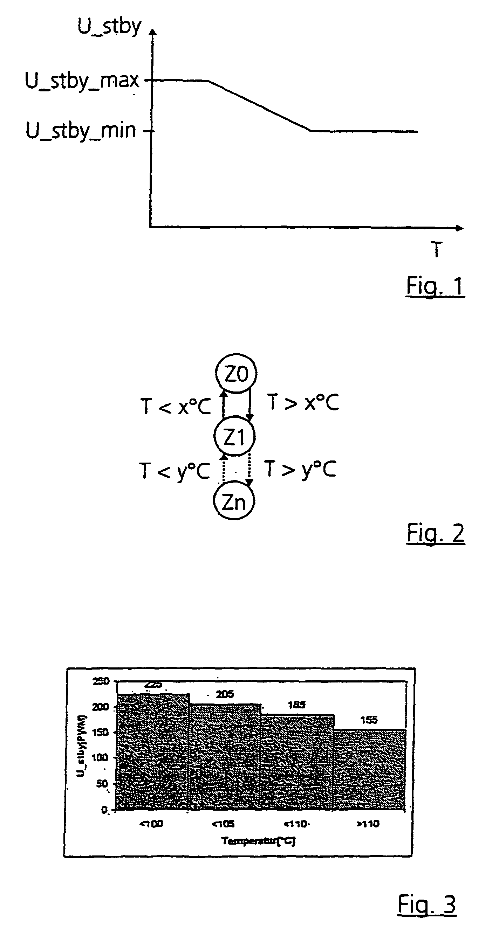

Die erfindungsgemäß zu steuernde elektrohydraulische Pumpe wird in üblicher Weise von einem Elektromotor angetrieben, wobei die Drehzahl der Pumpe in Abhängigkeit eines Schaltpunktes zwischen einer Standby-Drehzahl (U_stby) und einem Normalbetrieb varriert wird. Wie aus Fig. 1 ersichtlich ist, wird die Standby-Drehzahl (U_stby) temperaturabhängig verändert. Vorgesehen ist dabei, dass die Standby-Drehzahl (U_stby) in temperaturkritischen Zuständen bzw. bei steigender Temperatur (T) reduziert bzw. abgesenkt wird. In dem Ausführungsbeispiel ist dabei auch vorgesehen, dass die Standby-Drehzahl (U_stby) bei fallenden Temperaturen (T), vorzugsweise bis zu einer Obergrenze, der Maximal-Standby-Drehzahl (U_stby_max) erhöht wird.

Erfindungsgemäß kann auch vorgesehen sein, dass die Standby-Drehzahl (U_stby) nur bis zu einer Untergrenze, der Minimal-Standby-Drehzahl (U_stby_min) abgesenkt wird. Diese Untergrenze (U_stby_min) kann dabei derart gewählt werden, dass ein reibungsloser Betrieb der Pumpe weiterhin möglich ist und trotzdem eine maximale Reduzierung der Temperaturerhöhung realisiert wird. In Abhängigkeit des Kraftfahrzeuges bzw. der Hilfskraftlenkung, die zur Auslenkung der Fahrzeugräder des Kraftfahrzeuges eingesetzt wird, kann die Untergrenze (U_stby_min) variieren. Dabei kann, wie beispielsweise in Fig. 3 näher dargestellt, vorgesehen sein, dass die Untergrenze (U_stby_min) durch einen PWM-Wert (Puls-Weiten-Modulation) von 130 bis 170, vorzugsweise 150 bis 155, dargestellt wird. Ein PWM-Wert von 255 kann hierbei 100% entsprechen, d.h. dass die ganze Zeit die volle Spannung anliegt.

Fig. 1 zeigt eine kontinuierliche Anpassung der Standby-Drehzahl (U_stby) in Abhängigkeit der Temperatur.

Fig. 2 und Fig. 3 zeigen eine temperaturabhängige Veränderung der Standby-Drehzahl (U_stby) in Stufen (Z). Die Standby-Drehzahl (U_stby) wird dabei in Stufen (Z) bzw. stufenweise analog zu der kontinuierlichen Anpassung gemäß Fig. 1 verändert.

In Fig. 2 stellen die Werte Z0...Zn die verschiedenen Einzelschritte bzw. Stufen zur Absenkung und/oder Erhöhung der Standby-Drehzahl (U_stby) dar. Fig. 3 zeigt hierfür eine entsprechende Darstellung der Standby-Drehzahl (U_stby) in Abhängigkeit der Temperatur (T). Ausgehend von einem Normalbetrieb (Z0) wird beim Überschreiten einer vorgegebenen Temperatur (T) x °C die Standby-Drehzahl (U_stby) auf die erste Reduktionsstufe Z1 absenkt. Bei einem weiteren Ansteigen der Temperatur (T) beispielsweise über die Temperatur y °C wird die Standby-Drehzahl (U_stby) anschließend analog auf eine weitere Reduktionsstufe Z2 abgesenkt. Weitere Reduktionsstufen Zn können in beliebiger Anzahl vorgesehen sein. Analog dazu wird bei einem späteren Absinken der Temperatur (T) unter einen Wert y °C die Reduktion um eine Stufe reduziert, d.h. die Standby-Drehzahl (U_stby) wird um eine Stufe erhöht. Beim Unterschreiten der Temperatur x °C wird auch die letzte Reduktionsstufe wieder zurückgenommen, so dass der Normalbetrieb Z0 erreicht wird.

Die Absenkung bzw. die Erhöhung der Standby-Drehzahl (U_stby) kann beispielsweise bei einer Temperaturänderung von 2 bis 7°, vorzugsweise 5°, erfolgen. Eine Stufe Z kann beispielsweise eine Veränderung der Standby-Drehzahl (U_stby) von 10 bis 30 PWM, vorzugsweise 20 PWM, darstellen. Fig. 3 zeigt hierfür eine beispielhafte Darstellung, bei der die Reduktion in Temperaturschritten von 5° erfolgt und eine Stufe Z einer Veränderung von 20 PWM zur jeweils nächsten angrenzenden Stufe entspricht. Die Untergrenze (U_stby_min) entspricht dabei einem PWM-Wert von- 155 und die Obergrenze (U_stby_max) 225 PWM. Die Erfassung der Temperatur kann beispielsweise mittels einem bekannten Temperaturfühler, der vorzugsweise in der Elektronik des Elektromotors angeordnet ist, erfolgen. Die erfasste Temperatur (T) kann alle 1 bis 10 Sekunden, vorzugsweise 2 Sekunden, zur temperaturabhängigen Anpassung bzw. Veränderung der Standby-Drehzahl (U_stby) der Pumpe verwendet bzw. herangezogen werden.

### Bezugszeichen

- U_stby: Standby-Drehzahl
- U_stby_min: Untergrenze Standby-Drehzahl
- U_stby_max: Obergrenze-Standby-Drehzahl
- T: Temperatur
- Z: Stufen

## Patentansprüche

1. Verfahren zum Steuern einer elektrohydraulischen Pumpe, insbesondere einer Flügelpumpe, Rollenzellenpumpe oder Zahnradpumpe, die einen Volumenstrom für einen Verbraucher, insbesondere für eine Hilfskraftlenkung eines Kraftfahrzeuges, erzeugt, wobei die Pumpe von einem Elektromotor angetrieben wird, und wobei die Drehzahl der Pumpe in Abhängigkeit eines Schaltpunktes zwischen einer Standby-Drehzahl und einem Normalbetrieb variiert wird,
**dadurch gekennzeichnet, dass**
die Standby-Drehzahl (U_stby) temperaturabhängig verändert wird.

2. Verfahren nach Anspruch 1,
**dadurch gekennzeichnet, dass**
die Standby-Drehzahl (U_stby) in temperaturkritischen Zuständen bzw. bei steigender Temperatur (T) abgesenkt wird.

3. Verfahren nach Anspruch 1 oder 2,
**dadurch gekennzeichnet, dass**
die Standby-Drehzahl (U_stby) bei fallenden Temperaturen (T), vorzugsweise bis zu einer Maximal-Standby-Drehzahl (U_stby_max), erhöht wird.

4. Verfahren nach Anspruch 1, 2 oder 3,
**dadurch gekennzeichnet, dass**
die Temperatur (T) mittels einem Temperaturfühler, der vorzugsweise in der Elektronik des Elektromotors angeordnet ist, erfasst wird.

5. Verfahren nach Anspruch 4,
**dadurch gekennzeichnet, dass**
die erfasste Temperatur (T) alle eins bis zehn Sekunden, vorzugsweise zwei Sekunden, zur temperaturabhängigen Anpassung bzw. Veränderung der Standby-Drehzahl (U_stby) der Pumpe verwendet bzw. herangezogen wird.

6. Verfahren nach einem der Ansprüche 1 bis 5,
**dadurch gekennzeichnet, dass**
die Standby-Drehzahl (U_stby) temperaturabhängig in Stufen abgesenkt bzw. erhöht wird.

7. Verfahren nach Anspruch 6,
**dadurch gekennzeichnet, dass**
die Absenkung bzw. die Erhöhung der Standby-Drehzahl (U_stby) bei einer Temperaturänderung von zwei bis sieben Grad, vorzugsweise fünf Grad, erfolgt.

8. Verfahren nach Anspruch 6 oder 7,
**dadurch gekennzeichnet, dass**
die stufenweise durchgeführte Veränderung der Standby-Drehzahl (U_stby) in Stufen von 10 bis 30 PWM, vorzugsweise 20 PWM, erfolgt.

9. Verfahren nach einem der Ansprüche 1 bis 5,
**dadurch gekennzeichnet, dass**
die Standby-Drehzahl (U_stby) temperaturabhängig kontinuierlich abgesenkt bzw. erhöht wird.

10. Verfahren nach einem der Ansprüche 1 bis 9,
**dadurch gekennzeichnet, dass**
die Standby-Drehzahl (U_stby) der Pumpe nur bis zu einer Untergrenze (U_stby_min) abgesenkt wird.

11. Verfahren nach Anspruch 10,
**dadurch gekennzeichnet, dass**
die Untergrenze (U_stby_min) der Standby-Drehzahl (U_stby) einem PWM-Wert von 130 bis 170 PWM, vorzugsweise 150 bis 155 PWM, entspricht, wobei 255 PWM 100% bzw. einem Anliegen der vollen Spannung über die ganze Zeit entspricht.

## Claims

1. Method for controlling an electrohydraulic pump, in particular a vane pump, roller cell pump or gear pump, which produces a volumetric flow for a load, in particular for a power-assisted steering system of a motor vehicle, the pump being driven by an electric motor and the rotational speed of the pump being varied between a standby rotational speed and a normal mode as a function of a switching point, **characterized in that** the standby rotational speed (U_stby) is varied as a function of temperature.

2. Method according to Claim 1, **characterized in that** the standby rotational speed (U_stby) is reduced in temperature-critical states or if the temperature (T) rises.

3. Method according to Claim 1 or 2, **characterized in that** the standby rotational speed (U_stby) is increased, preferably up to a maximum standby rotational speed (U_stby_max), at falling temperatures (T).

4. Method according to Claim 1, 2 or 3, **characterized in that** the temperature (T) is sensed by means of a temperature sensor which is preferably arranged in the electronics of the electric motor.

5. Method according to Claim 4, **characterized in that** the sensed temperature (T) is used every one to ten seconds, preferably two seconds, for adapting or changing the standby rotational speed (U_stby) of the pump as a function of the temperature.

6. Method according to one of Claims 1 to 5, **characterized in that** the standby rotational speed (U_stby) is lowered or increased in steps as a function of temperature.

7. Method according to Claim 6, **characterized in that** the standby rotational speed (U_stby) is lowered or increased after a change in temperature of from two to seven degrees, preferably five degrees.

8. Method according to Claim 6 or 7, **characterized in that** the change, carried out in steps, of the standby rotational speed (U_stby) is performed in steps of from 10 to 30 PWM, preferably 20 PWM.

9. Method according to one of Claims 1 to 5, **characterized in that** the standby rotational speed (U_stby) is continuously lowered or increased as a function of the temperature.

10. Method according to one of Claims 1 to 9, **characterized in that** the standby rotational speed (U_stby) of the pump is lowered only as far as a lower limit (U_stby_min).

11. Method according to Claim 10, **characterized in that** the lower limit (U_stby_min) of the standby rotational speed (U_stby) corresponds to a PWM value of 130 to 170 PWM, preferably 150 to 155 PWM, 255 PWM corresponding to 100% or to application of the full voltage for the entire time period.

## Revendications

1. Méthode de réglage d'une pompe électrohydraulique, notamment une pompe à ailettes, une pompe cellulaire avec rouleaux ou une pompe à engrenages, qui produit un courant volumique pour un consommateur, en particulier pour une direction assistée d'un véhicule automobile, la pompe étant entraînée par un moteur électrique et la vitesse de la pompe étant modifiée en fonction d'un point de commutation entre une vitesse d'attente et un fonctionnement normal, **caractérisée en ce que** la vitesse d'attente (U_stby) est modifiée en fonction de la température.

2. Méthode selon la revendication 1,
**caractérisée en ce que**
la vitesse d'attente (U_stby) est abaissée dans des états de température critiques ou lorsque la température (T) augmente.

3. Méthode selon la revendication 1 ou 2,
**caractérisée en ce que**
la vitesse d'attente (U_stby) est augmentée lorsque les températures (T) chutent, de préférence jusqu'à une vitesse d'attente maximale (U_stby_max).

4. Méthode selon la revendication 1, 2 ou 3,
**caractérisée en ce que**
la température (T) est détectée au moyen d'un capteur de température qui est de préférence disposé dans l'électronique du moteur électrique.

5. Méthode selon la revendication 4,
**caractérisée en ce que**
la température détectée (T) est utilisée ou prise en compte toutes les une à dix secondes, de préférence toutes les deux secondes, pour l'adaptation ou la modification en fonction de la température de la vitesse d'attente (U-stby) de la pompe.

6. Méthode selon l'une quelconque des revendications 1 à 5,
**caractérisée en ce que**
la vitesse d'attente (U_stby) est abaissée ou augmentée par incréments en fonction de la température.

7. Méthode selon la revendication 6,
**caractérisée en ce que**
l'abaissement ou l'augmentation de la vitesse d'attente (U_stby) s'effectue pour une variation de température de deux à sept degrés, de préférence de cinq degrés.

8. Méthode selon la revendication 6 ou 7,
**caractérisée en ce que**
la modification de la vitesse d'attente (U_stby) réalisée par incréments s'effectue par incréments de 10 à 30 PWM, de préférence de 20 PWM.

9. Méthode selon l'une quelconque des revendications 1 à 5,
**caractérisée en ce que**
la vitesse d'attente (U_stby) est abaissée ou augmentée en continu en fonction de la température.

10. Méthode selon l'une quelconque des revendications 1 à 9,
**caractérisée en ce que**
la vitesse d'attente (U_stby) de la pompe n'est abaissée que jusqu'à une limite inférieure (U_stby_min).

11. Méthode selon la revendication 10,
**caractérisée en ce que**
la limite inférieure (U_stby_min) de la vitesse d'attente (U_stby) correspond à une valeur PWM de 130 à 170 PWM, de préférence de 150 à 155 PWM, une valeur de 255 PWM correspondant à 100% ou à une application de la tension complète pendant tout le temps.
